# EUROPEAN PATENT SPECIFICATION

(11) **EP 4 175 051 B1**
(45) Date of publication and mention of the grant of the patent: **21.01.2026**
(21) Application number: 22204407.5
(22) Date of filing: 28.10.2022
(51) Int. Cl.: H01M 50/54, H01M 50/105, H01M 50/536

(54) **SECONDARY BATTERY**
SEKUNDÄRBATTERIE
BATTERIE SECONDAIRE

(30) Priority: 29.10.2021 KR 20210146787
(43) Date of publication of application: 03.05.2023
(73) Proprietor: Samsung SDI Co., Ltd., Yongin-si, Gyeonggi-do 17084 (KR)
(72) Inventor: Shin, Jeong Soon, 17084 Yongin-si, Gyeonggi-do (KR); Choi, Kyu Gil, 17084 Yongin-si, Gyeonggi-do (KR)
(74) Representative: Gulde & Partner

(56) References cited:
- EP-A2- 2 365 562
- WO-A1-2017/146369

## Description

### BACKGROUND

### 1. Field

Embodiments relate to a secondary battery constituted by stacked cells.

### 2. Description of the Related Art

In general, a secondary battery is a chargeable and dischargeable battery, unlike a primary battery that is not chargeable. The secondary battery may be used in the form of a single battery depending on the type of external device to be applied or may be used in the form of a battery module in which a plurality of batteries is connected and bundled as a unit.

As secondary batteries are used in large transportation means, such as hybrid vehicles, beyond being used as power sources for small electronic devices, such as cell phones and notebook computers, the demand for high-output and high-capacity batteries is rapidly increasing.

In order to supply sufficient power to an electronic device or transportation means, a structure of the secondary battery itself has to be designed stably. In particular, there is a need for a method for solving a problem of deterioration of cell stability due to problems such as tearing of an electrode plate of an electrode assembly or breakage of a base material tab during repeated charging and discharging of the secondary battery. Examples for secondary batteries may be found in WO 2017/146369 A1 or EP 2 365 562 A2.

The above-described information disclosed in the technology that serves as the background of the present invention is only for improving understanding of the background of the present invention and thus may include information that does not constitute the related art.

### SUMMARY

Embodiments provide a secondary battery capable of increasing in capacity by reducing a length of a bent area of an electrode tab.

An aspect of the present disclosure provides a secondary battery including an electrode assembly, which includes a plurality of first electrode plates coated with a first active material, a plurality of second electrode plates coated with a second active material, and a separator disposed between each of the first electrode plates and each of the second electrode plates, the secondary battery including: a plurality of first base material tabs protruding from the plurality of first electrode plates, respectively; and a plurality of second base material tabs protruding from the plurality of second electrode plates, respectively, wherein each of the plurality of first base material tabs are gathered to one end of the electrode assembly in a thickness direction (Y) of the electrode assembly and are coupled to each other, and each of the plurality of second base material tabs are gathered to one end of the electrode assembly in a thickness direction (Y) of the electrode assembly and are coupled to each other.

Each of the plurality of first base material tabs may be provided at the same position in a width direction (Z) of the electrode assembly and be gathered to an upper end of the electrode assembly in a thickness direction (Y) of the electrode assembly, and each of the plurality of second base material tabs may be provided at the same position in a width direction (Z) of the electrode assembly and be gathered to an upper end of the electrode assembly in a thickness direction (Y) of the electrode assembly. Wherein the plurality of first base material tabs and the plurality of second base material tabs may not be at the same the position in width direction (Z) of the electrode assembly.

A length (d) by which each of the first base material tabs and each of the second base material tabs protrude from the electrode assembly so as to be coupled to each other is 1.7 mm or less. Preferably, the length (d) by which each of the first base material tabs and each of the second base material tabs protrude from the electrode assembly so as to be coupled to each other may be 0.5 to 1.7 mm, more preferably 0.8 to 1.5mm, most preferably 1.0 to 1.7mm, also preferred may be 1.0 to 1.6 mm.

The electrode assembly may have a thickness of 5 mm or less. Preferably, electrode assembly may have a thickness of 2 to 5 mm, more preferably 3 to 5mm, most preferably 2 to 4 mm.

The plurality of first base material tabs and the plurality of second base material tabs may extend in a direction perpendicular to a thickness of the electrode assembly so as to be gathered to be coupled to each other without being bent in the thickness direction of the electrode assembly.

A lead tab may be coupled to each of an end of the plurality of first base material tabs, which are gathered to be coupled to each other, and an end of the plurality of second base material tabs, which are gathered to be coupled to each other.

The lead tab may be coupled to each of the first base material tab and the second base material tab through butt welding. The lead tab may be butt-welded to each of the first base material tab and the second base material tab.

An insulating tape may be covered on an area on which each of the first base material tab and the second base material tab is coupled to the lead tab.

The electrode assembly may be accommodated in a pouch comprising an upper end and a lower end, and the insulating tape may be disposed on a boundary at which the upper end and the lower end of the pouch are coupled to each other.

The lower end of the pouch may have an accommodation groove, and the accommodation groove may have a height corresponding to a height at which each of the first base material tab and the second base material tab is disposed with respect to the electrode assembly.

### BRIEF DESCRIPTION OF THE DRAWINGS

The accompanying drawings are included to provide a further understanding of the present disclosure, and are incorporated in and constitute a part of this specification. The drawings illustrate exemplary embodiments of the present disclosure and, together with the description, serve to explain principles of the present disclosure. In the drawings:
FIG. 1 is a schematic exploded perspective view illustrating a structure of an electrode assembly in a secondary battery according to an embodiment;
FIG. 2 is a side view illustrating the electrode assembly of FIG. 1;
FIG. 3 is a perspective view illustrating the electrode assembly of FIG. 1; and
FIG. 4 is a view illustrating a state in which the electrode assembly is accommodated in a pouch in the secondary battery according to an embodiment.

### DETAILED DESCRIPTION

The present invention may, however, be embodied in many different forms and should not be construed as being limited to the embodiments set forth herein; rather, these embodiments are provided so that those skilled in the art thoroughly understand the present invention. Rather, these embodiments are provided so that this disclosure will be thorough and complete, and will fully convey the scope of the present invention to those skilled in the art.

In addition, in the following drawings, the thickness or size of each layer is exaggerated for convenience and clarity of description, and the same reference numerals in the drawings refer to the same elements. As used herein, the term "and/or" includes any and all combinations of one or more of the associated listed items. In this specification, it will also be understood that when a member A is referred to as being connected to a member B, the member A can be directly connected to the member B or indirectly connected to the member B with a member B therebetween.

The terms used herein are for illustrative purposes of the present invention only and should not be construed to limit the meaning or the scope of the present invention. As used in this specification, a singular form may, unless definitely indicating a particular case in terms of the context, include a plural form. Also, the expressions "comprise/include" and/or "comprising/including" used in this specification neither define the mentioned shapes, numbers, steps, operations, members, elements, and/or groups of these, nor exclude the presence or addition of one or more other different shapes, numbers, steps, operations, members, elements, and/or groups of these, or addition of these. The term "and/or" used herein includes any and all combinations of one or more of the associated listed items.

As used herein, terms such as "first," "second," etc. are used to describe various members, components, areas, layers, and/or portions. However, it is obvious that the members, components, areas, layers, and/or portions should not be defined by these terms. The terms do not mean a particular order, up and down, or superiority, and are used only for distinguishing one member, component, area, layer, or portion from another member, component, area, layer, or portion. Thus, a first member, component, area, layer, or portion which will be described may also refer to a second member, component, area, layer, or portion, without departing from the teaching of the present invention.

Spatially relative terms, such as "below", "beneath", "lower", "above", "upper" and the like, may be used herein for ease of description to describe one element or feature's relationship to another element(s) or feature(s) as illustrated in the figures. These spatially relative terms are intended for easy comprehension of the prevent invention according to various process states or usage states of the prevent invention, and thus, the present invention is not limited thereto. For example, an element or feature shown in the drawings is turned inside out, the element or feature described as "beneath" or "below" may change into "above" or "upper". Thus, the term "lower" may encompass the term "upper" or "below".

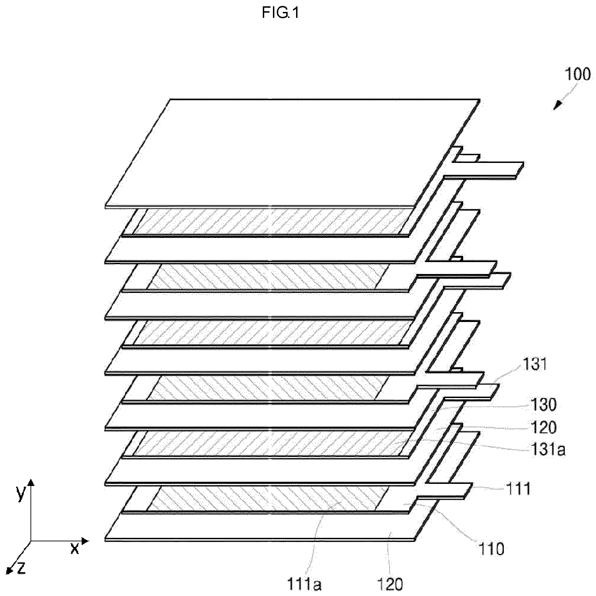

Herein, the dimensions of the electrode assembly 100 may be characterized by a Cartesian coordinate system (cf. Fig. 1 to 3) according to which the width direction corresponds to the Z-coordinate, the thickness direction corresponds to the Y-coordinate and the length direction corresponds to the X-coordinate.

Hereinafter, before describing an electrode assembly according to an embodiment with reference to the accompanying drawings, a general structure of the electrode assembly will be described first.

FIG. 1 is a schematic exploded perspective view illustrating a structure of an electrode assembly in a secondary battery according to an embodiment.

As illustrated in FIG. 1, an electrode assembly 100 has a structure in which a first electrode plate 110 provided by applying a first active material 111a on each of both surfaces of a base material, a separator 120, and a second electrode plate 130 provided by applying a second active material 131a on each of both the surfaces of the base material are sequentially stacked. Here, the separator 120 may be inserted between the first electrode plate 110 and the second electrode plate 130 to prevent short circuit between the electrode plates from occurring. For example, the first electrode plate 110 may be provided as a positive electrode plate, and the second electrode plate 130 may be provided as a negative electrode plate, but may also be possible to change polarities into each other.

A first base material tab 111 and a second base material tab 131, on which the active material is not applied to be electrically connected to an external electrode terminal, may be disposed on ends of one side of the first electrode plate 110 and one side of the second electrode plate 120, respectively. Structures and welding methods of the first base material tab 111 and the second base material tab 131 are the same, and for convenience, the first base material tab 111 will be described as a reference.

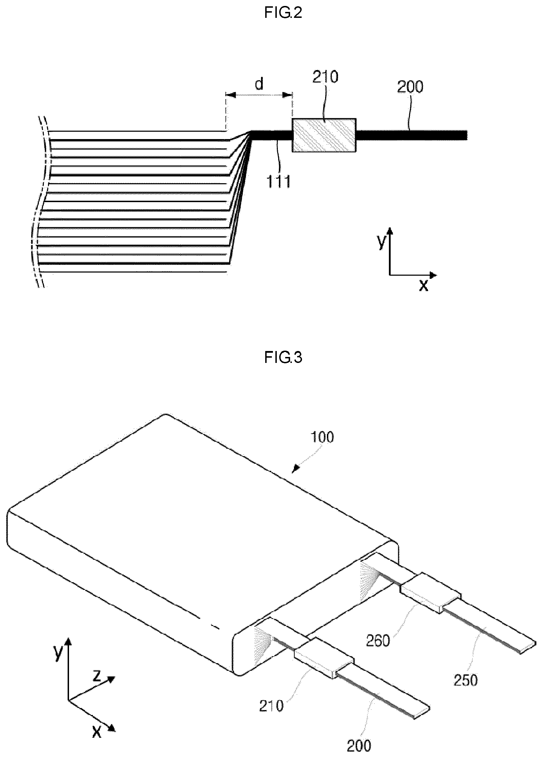

FIG. 2 is a side view illustrating the electrode assembly of FIG. 1. FIG. 3 is a perspective view illustrating the electrode assembly of FIG. 1.

Referring to FIG. 2, a plurality of first base material tabs respectively protruding from a plurality of electrode plates 110 of the electrode assembly protrude at regular intervals in a direction that is approximately perpendicular to a height of the electrode assembly. The first base material tabs 111 are gathered in an upper region of the electrode assembly and are coupled to each other in the state of being gathered by an insulating tape 210 at the concentrated portion thereof. Here, a shape of the first base material tabs 111 may be gathered at an upper end of the electrode assembly and then welded to a lead tab 200. In addition, the insulating tape 210 may be provided to surround the welded portion of the first base material tabs 111 and the lead tab 200.

A length d of each of the first base material tabs 111 in a horizontal direction (direction perpendicular to the thickness of the electrode assembly) in which the first base material tab 111 protrudes from each of the first electrode plate 110 to reach the end thereof, which is welded to the lead tab 200, is 1.7 mm or less. When the length d of the first base material tab 111 is 1.7 mm or less, it may be suitable for the structure according to the present disclosure, which does not require bending of the first base material tab 111. Particularly, in the structure in which the first base material tabs 111 are gathered, and the end of the gathered first base material tab 111 are directly welded to the lead tab 200, in particular, in the welding method, butt welding may be used. Therefore, when the length d of the first base material tab 111 is 1.7 mm or less, rigidity of the first base material tab 111 may be secured to reduce an occurrence of bending, and thus, the welding with the lead tab 200 may be easily performed.

In addition, when the length d of the first base material tab 111 exceeds 1.7 mm, sagging may occur in the first base material tab 111, and thus, an additional structure such as V-bending for offsetting the occurrence of the sagging may be required. Therefore, in the present disclosure, the length d of the first base material tab 111 is provided to be 1.7 mm or less.

In addition, the total thickness of the electrode assembly 100 may be provided to be 5 mm or less. When the thickness of the electrode assembly 100 is 5 mm or less, while the length d of the first base material tab 111 in the horizontal direction is maintained to be according to the abovesaid (preferably 1.7 mm), the first base material tabs 111 may be easily concentrated at the upper end of the electrode assembly 110.

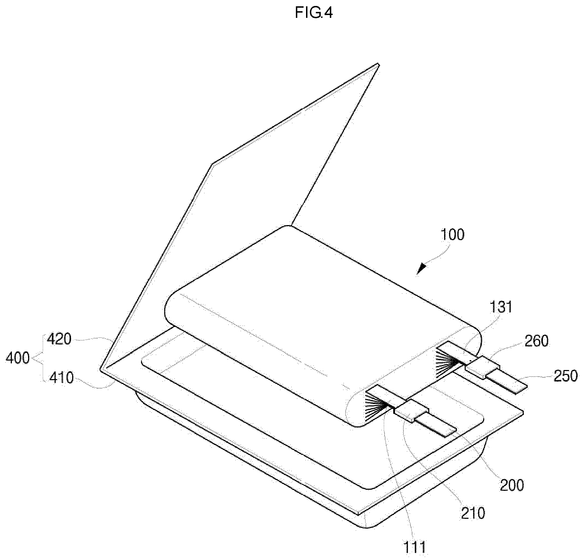

FIG. 4 is a view illustrating a state in which the electrode assembly is accommodated in a pouch in the secondary battery according to an embodiment.

Referring to FIG. 4, a coupling structure of the electrode assembly 100 and the lead tab 200 may be accommodated in a pouch 400. Here, the pouch 400 may include a lower end 410 that accommodates the electrode assembly 100 through an internal groove around a bent area and an upper end 420 folded with respect to a boundary that is in contact with the lower end 410 to seal the lower end 410. In other words, the pouch 400 may include a lower end 410 that accommodates the electrode assembly 100 in an accommodation groove, and an upper end 420 that is in contact with the lower end 410 forming a foldable edge of the pouch. The pouch 400 may be sealed by folding along the foldable edge and contacting the upper end 420 with the lower end 410.

In this case, a depth of the accommodation groove of the lower end 410 may be defined to approximately correspond to the thickness of the electrode assembly 100. Thus, when the electrode assembly 100 is accommodated in the accommodation groove of the lower end 410 of the pouch, the first base material tab 111 and the second base material tab 131 may be disposed above the lower end 410. In other words, the first base material tab 111 and the second base material tab 131 may protrude from the accommodation groove of the lower end 410 of the pouch as to not being in direct contact with the lower end 410 of the pouch.

In addition, insulating tapes 210 and 260 coupled to the first base material tab 111 and the second base material tab 131 may be disposed to correspond to an edge of the lower end 410. Thus, the insulating tapes 210 and 260 may prevent the first base material tab 111 and the second base material tab 131 as well as the lead tabs 200 and 250, which are respectively connected to the first base material tab 111 and the second base material tab 131 from being in direct contact with the pouch 400, thereby improving electrical insulation.

As described above, since the first base material tab 111 and the second base material tab 131 are disposed at the upper end of the electrode assembly 100 without separate bending, the lead tabs 200 and 250 coupled to the first base material tab 111 and the second base material tab 131 may extend to the outside of the lower end 410. In addition, since a space required for the first base material tab 111 and the second base material tab 131 is minimized, a space for accommodating the electrode assembly 100 with respect to the lower end 410 of the pouch 400 may be minimized, in other words, energy density of the secondary battery may increase. Therefore, the secondary battery according to an embodiment may be easily manufactured while increasing in energy density.

According to the embodiment, the electrode tab may increase in capacity by reducing the length of the bent area to facilitate the manufacturing.

The above-mentioned embodiment is merely an embodiment, and thus, the present invention is not limited to the foregoing embodiment, and also it will be understood by those of ordinary skill in the art that various changes in form and details may be made therein without departing from the scope of the present invention as defined by the following claims.

## Claims

1. A secondary battery comprising an electrode assembly (100), which comprises a plurality of first electrode plates (110) coated with a first active material (111a), a plurality of second electrode plates (130) coated with a second active material (131a), and a separator (120) disposed between each of the first electrode plates and each of the second electrode plates, the secondary battery comprising:
a plurality of first base material tabs (111) protruding from the plurality of first electrode plates (110), respectively; and
a plurality of second base material tabs (131) protruding from the plurality of second electrode plates (130), respectively,
wherein each of the plurality of first base material tabs (111) are gathered to one end of the electrode assembly in a thickness direction of the electrode assembly and are coupled to each other, and
each of the plurality of second base material tabs (131) are gathered to one end of the electrode assembly in the thickness direction of the electrode assembly and are coupled to each other,
wherein a length by which each of the first base material tabs (111) and each of the second base material tabs (131) protrude from the electrode assembly (100) so as to be coupled to each other is 1.7 mm or less.

2. The secondary battery of claim 1, wherein each of the plurality of first base material tabs (111) are provided at the same position in a width direction of the electrode assembly (100) and are gathered to an upper end of the electrode assembly in a thickness direction of the electrode assembly (100), and each of the plurality of second base material tabs (131) are provided at the same position in a width direction of the electrode assembly (100) and are gathered to an upper end of the electrode assembly in a thickness direction of the electrode assembly (100).

3. The secondary battery of claim 1, wherein the electrode assembly (100) has a thickness of 5 mm or less.

4. The secondary battery of claim 1, wherein a lead tab (200, 250) is coupled to each of an end of the plurality of first base material tabs (111), which are gathered to be coupled to each other, and an end of the plurality of second base material tabs (131), which are gathered to be coupled to each other.

5. The secondary battery of claim 4, wherein the lead tab (200, 250) is coupled to each of the first base material tab (111) and the second base material tab (131) through butt welding.

6. The secondary battery of claim 4, wherein an insulating tape (210, 260) is covered on an area on which each of the first base material tab (111) and the second base material tab (131) is coupled to the lead tab (200, 250).

7. The secondary battery of claim 6, wherein the electrode assembly (100) is accommodated in a pouch (400) comprising an upper end (420) and a lower end (410), and
the insulating tape (210) is disposed on a boundary at which the upper end (420) and the lower end (410) of the pouch are coupled to each other.

8. The secondary battery of claim 7, wherein the lower end of the pouch (410) has an accommodation groove, and
the accommodation groove has a height corresponding to a height at which each of the first base material tab (111) and the second base material tab (131) is disposed with respect to the electrode assembly (100).

## Patentansprüche

1. Sekundärbatterie, umfassend eine Elektrodenanordnung (100), welche eine Vielzahl von ersten Elektrodenplatten (110), die mit einem ersten Aktivmaterial (111a) beschichtet sind, eine Vielzahl von zweiten Elektrodenplatten (130), die mit einem zweiten Aktivmaterial (131a) beschichtet sind, und einen Separator (120), der zwischen jeder der ersten Elektrodenplatten und jeder der zweiten Elektrodenplatten angeordnet ist, umfasst, wobei die Sekundärbatterie aufweist:
eine Vielzahl von ersten Basismateriallaschen (111), die jeweils von der Vielzahl der ersten Elektrodenplatten (110) vorstehen; und
eine Vielzahl von zweiten Basismateriallaschen (131), die jeweils von der Vielzahl der zweiten Elektrodenplatten (130) vorstehen,
wobei jede der Vielzahl von ersten Basismateriallaschen (111) an einem Ende der Elektrodenanordnung in einer Dickenrichtung der Elektrodenanordnung gesammelt und miteinander gekoppelt ist, und
jede der Vielzahl von zweiten Basismateriallaschen (131) an einem Ende der Elektrodenanordnung in der Dickenrichtung der Elektrodenanordnung gesammelt und miteinander gekoppelt ist,
wobei eine Länge, um die jede der ersten Basismateriallaschen (111) und jede der zweiten Basismateriallaschen (131) von der Elektrodenanordnung (100) vorsteht, um miteinander gekoppelt zu werden, 1,7 mm oder weniger beträgt.

2. Sekundärbatterie nach Anspruch 1, wobei jede der Vielzahl von ersten Basismateriallaschen (111) an derselben Position in einer Breitenrichtung der Elektrodenanordnung (100) bereitgestellt und an einem oberen Ende der Elektrodenanordnung in einer Dickenrichtung der Elektrodenanordnung (100) gesammelt ist, und jede der Vielzahl von zweiten Basismateriallaschen (131) an derselben Position in einer Breitenrichtung der Elektrodenanordnung (100) bereitgestellt und an einem oberen Ende der Elektrodenanordnung in einer Dickenrichtung der Elektrodenanordnung (100) gesammelt ist.

3. Sekundärbatterie nach Anspruch 1, wobei die Elektrodenanordnung (100) eine Dicke von 5 mm oder weniger aufweist.

4. Sekundärbatterie nach Anspruch 1, wobei eine Ableitlasche (200, 250) jeweils mit einem Ende der Vielzahl von ersten Basismateriallaschen (111), die so gesammelt sind, dass sie miteinander gekoppelt werden, und einem Ende der Vielzahl von zweiten Basismateriallaschen (131), die so gesammelt sind, dass sie miteinander gekoppelt werden, gekoppelt ist.

5. Sekundärbatterie nach Anspruch 4, wobei die Ableitlasche (200, 250) jeweils mit der ersten Basismateriallasche (111) und der zweiten Basismateriallasche (131) durch Stumpfschweißen gekoppelt ist.

6. Sekundärbatterie nach Anspruch 4, wobei ein Isolierband (210, 260) auf einem Bereich abgedeckt ist, auf dem jeweils die erste Basismateriallasche (111) und die zweite Basismateriallasche (131) mit der Ableitlasche (200, 250) gekoppelt sind.

7. Sekundärbatterie nach Anspruch 6, wobei die Elektrodenanordnung (100) in einer Tasche (400), die ein oberes Ende (420) und ein unteres Ende (410) umfasst, untergebracht ist, und
das Isolierband (210) an einer Grenze angeordnet ist, an der das obere Ende (420) und das untere Ende (410) der Tasche miteinander gekoppelt sind.

8. Sekundärbatterie nach Anspruch 7, wobei das untere Ende der Tasche (410) eine Aufnahmevertiefung aufweist, und
die Aufnahmevertiefung eine Höhe aufweist, die einer Höhe entspricht, in der jeweils die erste Basismateriallasche (111) und die zweite Basismateriallasche (131) in Bezug auf die Elektrodenanordnung (100) angeordnet sind.

## Revendications

1. Batterie secondaire comportant un ensemble d'électrodes (100), qui comporte une pluralité de premières plaques d'électrode (110) revêtues d'un premier matériau actif (111a), une pluralité de secondes plaques d'électrode (130) revêtues d'un second matériau actif (131a), et un séparateur (120) disposé entre chacune des premières plaques d'électrode et chacune des secondes plaques d'électrode, la batterie secondaire comportant :
une pluralité de premières languettes de matériau de base (111) faisant saillie à partir de la pluralité de premières plaques d'électrode (110), respectivement ; et
une pluralité de secondes languettes de matériau de base (131) faisant saillie à partir de la pluralité de secondes plaques d'électrode (130), respectivement,
dans laquelle chacune de la pluralité de premières languettes de matériau de base (111) sont rassemblées à une extrémité de l'ensemble d'électrodes dans une direction d'épaisseur de l'ensemble d'électrodes et sont couplées les unes aux autres, et
chacune de la pluralité de secondes languettes de matériau de base (131) sont rassemblées à une extrémité de l'ensemble d'électrodes dans la direction d'épaisseur de l'ensemble d'électrodes et sont couplées les unes aux autres,
dans laquelle une longueur dont chacune des premières languettes de matériau de base (111) et chacune des secondes languettes de matériau de base (131) font saillie à partir de l'ensemble d'électrodes (100) de façon à être couplées les unes aux autres est de 1,7 mm ou moins.

2. Batterie secondaire selon la revendication 1, dans laquelle chacune de la pluralité de premières languettes de matériau de base (111) sont ménagées à la même position dans une direction de largeur de l'ensemble d'électrodes (100) et sont rassemblées à une extrémité supérieure de l'ensemble d'électrodes dans une direction d'épaisseur de l'ensemble d'électrodes (100), et chacune de la pluralité de secondes languettes de matériau de base (131) sont ménagées à la même position dans une direction de largeur de l'ensemble d'électrodes (100) et sont rassemblées à une extrémité supérieure de l'ensemble d'électrodes dans une direction d'épaisseur de l'ensemble d'électrodes (100).

3. Batterie secondaire selon la revendication 1, dans laquelle l'ensemble d'électrodes (100) possède une épaisseur de 5 mm ou moins.

4. Batterie secondaire selon la revendication 1, dans laquelle une languette de conducteur (200, 250) est couplée à chacune parmi une extrémité de la pluralité de premières languettes de matériau de base (111), qui sont rassemblées pour être couplées les unes aux autres, et une extrémité de la pluralité de secondes languettes de matériau de base (131), qui sont rassemblées pour être couplées les unes aux autres.

5. Batterie secondaire selon la revendication 4, dans laquelle la languette de conducteur (200, 250) est couplée à chacune parmi la première languette de matériau de base (111) et la seconde languette de matériau de base (131) par soudage bout à bout.

6. Batterie secondaire selon la revendication 4, dans laquelle un ruban isolant (210, 260) recouvre une zone sur laquelle chacune parmi la première languette de matériau de base (111) et la seconde languette de matériau de base (131) est couplée à la languette de conducteur (200, 250).

7. Batterie secondaire selon la revendication 6, dans laquelle l'ensemble d'électrodes (100) est logé dans une poche (400) comportant une extrémité supérieure (420) et une extrémité inférieure (410), et
le ruban isolant (210) est disposé sur une limite au niveau de laquelle l'extrémité supérieure (420) et l'extrémité inférieure (410) de la poche sont couplées l'une à l'autre.

8. Batterie secondaire selon la revendication 7, dans laquelle l'extrémité inférieure de la poche (410) possède une rainure de logement, et
la rainure de logement possède une hauteur correspondant à une hauteur à laquelle chacune parmi la première languette de matériau de base (111) et la seconde languette de matériau de base (131) est disposée par rapport à l'ensemble d'électrodes (100).
